# EUROPÄISCHE PATENTANMELDUNG

(11) **EP 3 940 238 A1**
(43) Veröffentlichungstag der Anmeldung: **19.01.2022**
(21) Anmeldenummer: 20186303.2
(22) Anmeldetag: 16.07.2020
(51) Int. Cl.: F04D 17/10, F02B 37/10, F02B 39/10, F02C 6/12, F04D 25/06, F04D 29/58, H02K 5/04, H02K 9/19

(54) **TURBOVERDICHTER UMFASSEND EIN MOTORGEHÄUSE MIT EINEM KÜHLMITTELKANAL**

(71) Anmelder: BMTS Technology GmbH & Co. KG, 70376 Stuttgart (DE)
(72) Erfinder: HUBER, Glenn, D-70180 Stuttgart (DE); KLEINSCHMIDT, Eberhard, D-74354 Besigheim (DE); WEISS, Hartmut, D-70569 Stuttgart (DE)
(74) Vertreter: Herrmann, Jochen

(57) **Zusammenfassung**

Die Erfindung betrifft einen Turboverdichter, insbesondere einen Abgasturbolader, oder einen elektrisch angetriebenen Turboverdichter (10), mit einem Lagergehäuse (11), in dem eine Welle (12) drehbar gelagert ist, wobei die Welle (12) ein Verdichterrad (12.9) trägt, wobei ein Elektromotor zum Antrieb der Welle (12) vorgesehen ist, der einen Motorstator (40) und einen mit der Welle (12) gekoppelten Motorrotor (12.4) aufweist, wobei der Motorstator (40) zumindest bereichsweise in einem Motorgehäuse (20) aufgenommen ist und einen ferromagnetischen Statorkern (41) mit elektrische Spulen (45) aufweist, wobei das Motorgehäuse (20) und/oder das Lagergehäuse (11) zumindest einen Kühlmittelkanal (23) aufweisen der den Motorstator (40) zumindest bereichsweise umgibt. Um bei einem solchen Turboverdichter die Leistungsfähigkeit des Turboverdichter zu erhöhen und gleichzeitig die Kühlung effizient zu gestalten, ist es erfindungsgemäß vorgesehen, dass der Statorkern (41) einen einteiligen oder mehrteiligen Ringabschnitt aufweist, an den sich radial nach innen erstreckende Zähne (43) angekoppelt sind, dass der Ringabschnitt zwischen benachbarten Zähnen (43) Verbindungsabschnitte (42) ausbildet, dass zumindest auf einen Teil der Verbindungsabschnitte (42) die Spulen (45) zumindest bereichsweise aufgewickelt sind, und dass der Statorkern (41) im Bereich der Verbindungsabschnitte (42) Kühlabschnitte bildet, die Kühlabschnitten des Motorgehäuses (20) und/oder dem Lagergehäuses (11) gegenüberstehen, insbesondere an diesen anliegen.

## Beschreibung

Die Erfindung betrifft einen Turboverdichter, insbesondere einen Abgasturbolader oder einen elektrisch angetriebenen Turboverdichter, mit einem Lagergehäuse, in dem eine Welle drehbar gelagert ist, wobei die Welle ein Verdichterrad trägt, wobei ein Elektromotor zum Antrieb der Welle vorgesehen ist, der einen Motorstator und einen mit der Welle gekoppelten Motorrotor aufweist, wobei der Motorstator zumindest bereichsweise in einem Motorgehäuse aufgenommen ist und einen ferromagnetischen Statorkern mit elektrische Spulen aufweist, wobei das Motorgehäuse und/oder das Lagergehäuse zumindest einen Kühlmittelkanal aufweisen der den Motorstator zumindest bereichsweise umgibt,

US 8,157,544 B2 offenbart einen Abgasturbolader, welcher auf einer Welle ein Verdichterrad und ein Turbinenrad trägt. Im Bereich des Verdichterrads ist der Welle ein Elektromotor zugeordnet. Mittels des Elektromotors kann der Antrieb der Welle unterstützt werden. Der Elektromotor weist ein Motorgehäuse auf, in das der Motorstator eingebaut ist. Der Motorstator besitzt einen Eisenkern, auf den Spulen aufgewickelt sind. Der Motorrotor des Elektromotors ist mit seinen Permanentmagneten auf die Welle aufgezogen. Das Motorgehäuse weist als separates Teil eine Kartusche auf. Mit dem Elektromotor kann das Ansprechverhalten des Turboladers optimiert werden. Problematisch ist die Wärmeentwicklung, die beim Betrieb des Elektromotors entsteht. Diese Wärmeentwicklung bewirkt lokal unerwünschte thermische Ausdehnungen im Lagergehäuse, in dem die Kartusche eingesetzt ist. Daher schlägt die US 8,157,544 B2 Isolationselemente vor, die den Wärmeeintrag in das Lagergehäuse reduzieren sollen. Zudem ist ein Kühlkreislauf im Bereich des Elektromotors vorgesehen.

Es ist Aufgabe der Erfindung, einen leistungsfähigen Turboverdichter mit effizienter Kühlung bereitzustellen.

Diese Aufgabe wird erfindungsgemäß dadurch gelöst, dass der Statorkern einen einteiligen oder mehrteiligen Ringabschnitt aufweist, an den sich radial nach innen erstreckende Zähne angekoppelt sind, dass der Ringabschnitt zwischen benachbarten Zähnen Verbindungsabschnitte als Joche ausbildet, dass zumindest auf einen Teil der Verbindungsabschnitte die Spulen zumindest bereichsweise aufgewickelt sind, und dass der Statorkern im Bereich der Verbindungsabschnitte Kühlabschnitte bildet, die Kühlabschnitten des Motorgehäuses und/oder dem Lagergehäuses gegenüberstehen, insbesondere an diesen anliegen.

Dadurch dass die Spulen auf die Verbindungsabschnitte aufgewickelt sind, ergibt sich ein leistungsfähiger Elektromotor, der gegenüber Konstruktionen, bei denen die Spulen um die Zähne des Statorkerns gewickelt sind eine deutlich kompaktere Bauweise aufweist. Bei diesem leistungsfähigen Elektromotor entsteht in den Spulen eine hohe Wärmeentwicklung. Diese kann mit der erfindungsgemäßen Konstruktion effektiv abgeführt werden. Hierzu stehen die Verbindungsabschnitte zwischen den Spulen im wärmeleitenden Kontakt mit dem Motorgehäuse. Insbesondere kann die Verlustwärme, in räumlich dichter Zuordnung zu den Spulen, über die einander gegenüberstehenden Kühlabschnitte effektiv abgeleitet werden. Die einander gegenüberliegenden Kühlabschnitte liegen dabei vorzugsweise aneinander an, Hierunter sollen im Rahmen der Erfindung auch Ausgestaltungsvarianten verstanden werden, bei denen die Kühlabschnitte unter Bildung eines fertigungstechnisch durch Toleranzen bedingten Spalts einander gegenüberstehen.

Gemäß einer bevorzugten Erfindungsvariante kann es vorgesehen sein, dass die Kühlabschnitte des Statorkerns vorstehende, insbesondere in Radialrichtung nach außen vorstehende Stützabschnitte aufweisen und/oder dass die Kühlabschnitte des Lagergehäuses und/oder des Motorgehäuses vorstehende, insbesondere in Radialrichtung nach innen vorstehende Stützabschnitte aufweisen. Hierdurch wird eine besonders effektive Wärmeableitung nahe an den Spulen ermöglicht. Insbesondere dann, wenn das Motorgehäuse oder das Lagergehäuse die Stützabschnitte aufweisen, ergibt sich zudem eine gute Zentrierung des Motorstators im Lagergehäuse.
Wenn vorgesehen ist, dass zumindest ein Teil der Kühlabschnitte des Statorkerns und/oder des Lagergehäuses und/oder des Motorgehäuses Widerlager aufweisen, an denen der Statorkern anliegt und an denen er in Achsrichtung der Welle formschlüssig blockiert ist, dann ergibt sich eine weiter verbesserte Wärmeableitung. Entsprechend kann ein Wärmetransport somit auch über die Widerlager erfolgen. Zu dem wird hierdurch erreicht, dass der Statorkern dem Motorgehäuse auf einfache Weise in einer definierten Lage zugeordnet werden kann. Dies vereinfacht die Montage.

Um eine möglichst gleichmäßige Wärmeabfuhr zwischen zwei benachbarten Spulen erreichen zu können, kann es gemäß einer Erfindungsvariante vorgesehen sein, dass wenigstens ein Teil der Kühlabschnitte zumindest bereichsweise in radialer Verlängerung zu den Zähnen des Statorkerns angeordnet ist.

Für den Statorkern ergibt sich dann eine einfache Bauweise, wenn vorgesehen ist, dass die Zähne in Polstücken enden, die unter Bildung eines Spaltbereichs dem Motorrotor gegenüberstehen.

Ein erfindungsgemäßer Turboverdichter kann dergestalt sein, dass der Motorstator eine maximale Längserstreckung in Achsrichtung der Welle und einen maximalen Außendurchmesser aufweist, und dass das Verhältnis der maximalen Längserstreckung zu dem maximalen Außendurchmesser ≤0,33, vorzugsweise ≤0,3 ist. Der Elektromotor hat dann bei kompakter Bauweise gleichzeitig eine hohe Leistungsdichte.

Wenn vorgesehen ist, dass der Kühlmittelkanal den Motorstator über zumindest 270° seines Umfangs umgibt, dann ergibt sich eine gute und für den Anwendungszweck bei Turboverdichtern ausreichende Kühlwirkung, nahezu über den gesamten oder über den gesamten Umfang des Motorstators.

Zusätzlich kann vorgesehen sein, dass der Kühlmittelkanal einen Kühlmitteleinlass und einen Kühlmittelauslass aufweist, die im Bereich des Endes des Kühlmittelkanals zu einer Anschlussseite des Motorgehäuses oder des Lagergehäuses geführt sind. Dann gelingt der Anschluss an einen kühlmittelführenden Kreislauf auf einfache Weise.

Hierbei kann es auch weiterhin vorgesehen sein, dass im Bereich zwischen dem Kühlmitteleinlass und dem Kühlmittelauslass eine Öffnung des Motorgehäuses vorgesehen ist, die radialen Zugang zu dem den Motorstator aufnehmenden Bereich des Motorgehäuses schafft und durch die hindurch die Spulen elektrifiziert sind, insbesondere Strom-Versorgungsleitungen geführt sind. Auf diese Weise kann sowohl der elektrische Anschluss als auch der Anschluss an den Kühlkreislauf an der Anschlussseite gestaltet werden. Dabei sind der Stromanschluss und der Kühlanschluss gleichzeitig platzsparend voneinander getrennt.

Um die Funktionsfähigkeit des Elektromotors nicht zu beeinträchtigen, ist es gemäß einer Erfindungsvariante vorgesehen, dass das Motorgehäuse aus einem nicht magnetisierbaren Material, insbesondere aus Aluminium besteht. Dann kann der Statorkern problemlos zum Wärmeübertrag an dem Motorgehäuse anlegen. Wenn Aluminium für das Motorgehäuse verwendet wird, so ist ein effektiver Wärmetransport in den Kühlmittelkanal möglich. Insbesondere kann das Motorgehäuse dann auch als Gussteil gefertigt werden. Dies verringert den Teile- und Montageaufwand.

Eine besonders bevorzugte Erfindungsvariante ist derart, dass sich der Kühlmittelkanal in Achsrichtung der Welle zumindest über die sich in diese Richtung erstreckende Länge der Spulen erstreckt.

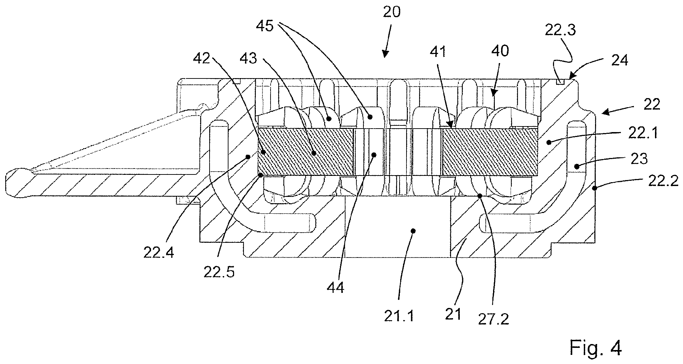

Eine weitere in Figur 4 dargestellte Erfindungsvariante ist derart, dass der Kühlmittelkanal einen Bereich aufweist, der sich in Achsrichtung der Welle erstreckt, dass der Kühlmittelkanal weiterhin einen Radialbereich aufweist, der sich zumindest bereichsweise in radialer Richtung erstreckt, wobei sich die Projektionen des Motorstators und des Radialbereichs in Richtung der der Achse der Welle in eine Ebene zumindest bereichsweise überdecken. Bei dieser Ausgestaltung eines Turboverdichters wird nicht nur eine Wärmeabfuhr von den Spulen in den Kühlmittelkanal in radialer Richtung, sondern auch in Achsenrichtung der Welle erreicht.

Wenn vorgesehen ist, dass der Kühlmittelkanal zumindest bereichsweise im Anschlußbereich zwischen dem Motorgehäuse und dem Lagergehäuse verläuft, dann wird der Wärmeeintrag von dem Elektromotor das Lagergehäuse reduziert.

An dieser Stelle soll erwähnt werden, dass im Rahmen der Erfindung das Motorgehäuse und das Lagergehäuse getrennte Bauteile bilden können. Weiterhin können das Motorgehäuse und das Lagergehäuse im Rahmen der Erfindung aber auch als ein Bauteil, insbesondere als ein Gussteil ausgeführt sein.

Ein erfindungsgemäßer Turboverdichter kann auch dergestalt sein, dass im oder am Motorgehäuse eine Vergussmasse vorgesehen ist, wobei der Statorkern und/oder die Spulen zumindest bereichsweise in der Vergussmasse eingebettet ist/sind. Mit der Vergussmasse wird eine einfache und kompakte mechanische Verbindung zwischen dem Motorstator und dem Motorgehäuse geschaffen. Zudem kann über die nicht elektrisch leitende Vergussmasse auch der Wärmetransport zwischen dem Statorkern bzw. den Spulen zu dem Motorgehäuse hin verbessert werden.

Der Vergussmasse können auch weitere Funktionen zugeordnet werden. Beispielsweise kann es vorgesehen sein, dass eine Gaszuführung vorgesehen ist, die in Strömungsrichtung vor dem Verdichterrad angeordnet ist und in Strömungsrichtung nach dem Verdichterrad in einen Diffusorkanal übergeleitet ist, dass der Diffusorkanal mittelbar oder unmittelbar in einen spiralförmigen Verdichterkanal übergeleitet ist, und dass die Vergussmasse einen Wandabschnitt bildet, der als Luftführungselement den Diffusorkanal und/oder den Verdichterkanal begrenzt. Dadurch dass die Vergussmasse als Luftführungselement des Diffusors bzw. des Verdichterkanals ausgebildet ist, kann in diesem Luftführungsbereich der Aufwand für zusätzliche Gehäuseteile reduziert bzw. eliminiert werden. Zudem ermöglicht diese Bauweise eine bessere Luftführung, da die Vergussmasse einfach maschinell bearbeitet werden kann. Die Oberflächenkontur der Vergussmasse lässt sich somit exakt auf die gewünschte Luftführungsgeometrie anpassen. Hierdurch verbessert sich der Wirkungsgrad des Turboverdichters. Die während des Betriebs des Elektromotors entstehende Abwärme kann zumindest teilweise von der Vergussmasse in die im Diffusorkanal bzw. Spiralkanal geleitete Luft kontinuierlich abgetauscht werden. Dies vereinfacht die Kühlung des Elektromotors. Ein weiterer Vorteil ergibt sich dadurch, dass eine axial kompakte Bauweise erreicht werden kann. Insbesondere lässt sich durch die erfindungsgemäße Maßnahme das Verdichterrad nahe an der zugewandten Lagerstelle der Welle positionieren. Hierdurch verringert sich die Lagerbelastung und es ergibt sich eine größerer Laufruhe der Welle und damit insgesamt des Turboverdichters.

Erfindungsgemäß kann es auch vorgesehen sein, dass die Zähne des Statorkerns von der Vergussmasse zumindest teilweise umgeben sind. Hierdurch werden die Zähne über die Vergussmasse stabilisiert und in Position gehalten. Weiterhin werden die Zähne dann vor Korrosion geschützt. Vorzugsweise kann es dabei auch vorgesehen sein, dass zumindest ein Teil der Polstücke an ihren an den Spaltbereich angrenzenden Enden nicht mit Vergussmasse bedeckt ist. Dann wird der zwischen Motorrotor und Motorstator erforderliche Spaltbereich nicht beeinträchtigt und definiert über die freien Enden der Polstücke begrenzt.

Um den radialen Bauraum optimal zu nutzen, kann es auch vorgesehen sein, dass die Innenwand des Motorgehäuses Aufnahmebereiche aufweist, die in Form von radial nach außen in die Innenwand eingetieften Aufnahmen ausgebildet sind, und dass in den Aufnahmebereichen jeweils zumindest eine Spule mit ihrem radial außenliegenden Spulenbereich zumindest teilweise aufgenommen ist. Dadurch dass die Spulen in den Bereich der Aufnahmen eingreifen, wird auch die Wärmeableitung von den Spulen deutlich verbessert.

Die Erfindung wird im Folgenden anhand eines in den Zeichnungen dargestellten Ausführungsbeispiels näher erläutert. Es zeigen:
Figur 1 im Vollschnitt und Teildarstellung einen elektromotorisch antreibbaren Turboverdichter,
Figur 2 eine Motoreinheit des Turboverdichters gemäß Figur 1 in perspektivischer Darstellung,
Figur 3 die Motoreinheit gemäß Figur 2 in Seitenansicht und im Schnitt,
Figur 4 eine Motoreinheit mit einem modifizierten Motorgehäuse,
Figur 5 die Motoreinheit gemäß den Figuren 2 und 3 in einer vereinfachten Darstellung in Seitenansicht und im Schnitt und
Figur 6 im Vollschnitt und in Teildarstellung eine weitere Ausgestaltungsvariante eines Turboverdichters, insbesondere eines elektromotorisch angetriebenen Turboverdichters.

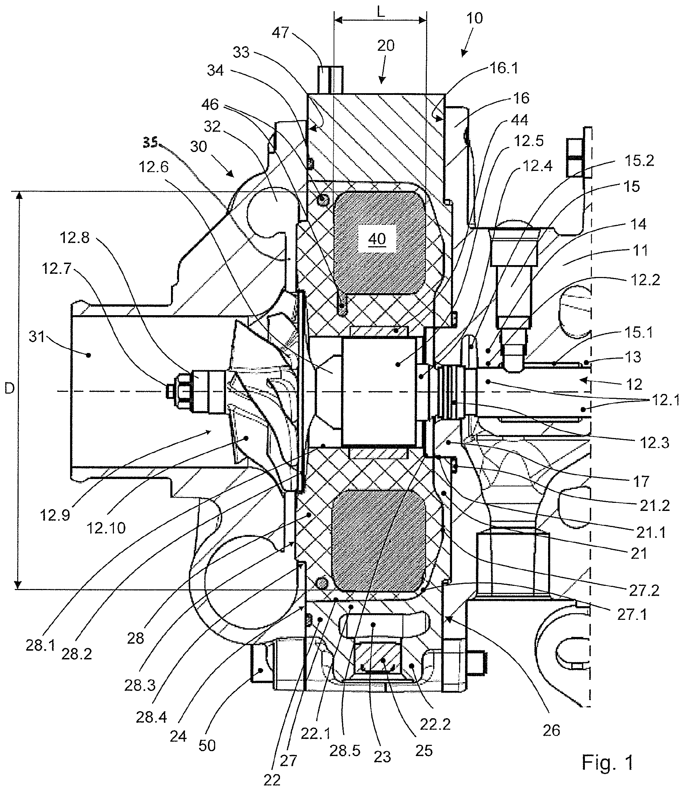

Figur 1 zeigt einen Turboverdichter zur Verwendung in einem Verbrennungsmotor. Die Erfindung ist allerdings nicht auf Turboverdichter in Brennkraftmaschinen beschränkt, sondern kann auch in einem Turboverdichter 10, beispielsweise in Brennstoffzellen zur Gasverdichtung, Verwendung finden.

In Figur 1 ist, zur besseren Übersichtlichkeit, nur ein Teil des Turboverdichters 10 gezeigt. Insbesondere veranschaulicht diese Darstellung die Gestaltung des Turboverdichters 10 im Bereich seiner Verdichterseite. Auf der rechten Bildseite ist durch eine gestrichelte Linie angedeutet, dass der Turboverdichter 10 zusätzlich auch noch eine Expansionsseite mit einem Turbinenrad aufweisen kann. Dieser Bereich des Turboverdichters 10 kann in gängiger Weise ausgeführt werden. Vorzugsweise kann dieser Bereich dann auch so gestaltet sein, wie es in der EP 3 293 406 A1 beschrieben ist.

Der Turboverdichter 10 besitzt ein Lagergehäuse 11, in dem eine Welle 12 drehbar gelagert ist. Bevorzugt ist die Lagerung der Welle 12 so gestaltet, wie dies in der EP 3 293 406 A1 beschrieben ist. Demgemäß können im Rahmen der Erfindung zur Lagerung der Welle 12 wenigstens ein, vorzugsweise zwei hydrodynamische Gleitlager 12.2 verwendet sein.

Dieses hydrodynamische Gleitlager 12.2 weist einen Stator und einem relativ zum Stator drehbaren Rotor auf, wobei eine Rotor-Lagerfläche einer Gegenfläche des Stators zur hydrodynamischen Druckerzeugung gegenübersteht. Die Rotor-Lagerfläche und/oder die Gegenfläche bilden bei einem Schnitt längs und durch die Rotationsachse der Welle 12 in Schnittansicht eine durchgehende Lagerkontur, die aus wenigstens zwei Konturabschnitten gebildet ist.

Der durch die Konturabschnitte gebildete Konturenzug ist dabei so gestaltet, dass er, vorzugsweise in Achsenrichtung durchgehend, hydrodynamische Tragfähigkeit erzeugt, die in radialer und axialer Richtung wirkt. Dabei können beispielsweise die Konturabschnitte mittels wenigstens eines Übergangsabschnitts derart stetig ineinander übergeleitet sein, dass durchgehend hydrodynamische Tragfähigkeit über die Konturabschnitte und den Übergangsabschnitt erzeugbar ist.

Das Gleitlager ist vorzugsweise als Mehrflächengleitlager mit zwei oder mehreren Schmierkeilen im Bereich der Konturabschnitte und des Übergangsabschnittes ausgebildet.

Entsprechend den vorstehenden Ausführungen weist die Welle 12 zwei Lagerabschnitte 12.1 auf, die jeweils Teil eines hydrodynamischen Gleitlagers 12.2 sind. Die beiden hydrodynamischen Gleitlager 12.2 sind zueinander axial beabstandet. Eines der hydrodynamischen Gleitlager 12.2 ist dabei, wie Figur 1 zeigt, im Bereich der Verdichterseite des Turboverdichters 10 angeordnet. Das andere hydrodynamische Gleitlager 12.2 ist dem turbinenseitigen Bereich des Turboverdichters zugeordnet. Die beiden Lagerabschnitte 12.1 stehen Lagerstellen 13, 14 des Lagergehäuses 11 gegenüber, um die hydrodynamischen Gleitlager 12.2 zu bilden. Dabei können die Lagerstellen 13, 14 auch von einer separaten Buchse oder separaten Buchsen des Lagergehäuses 11 gebildet sein. Die hydrodynamischen Gleitlager 12.2 werden über eine Schmiermittelversorgung 15 des Lagergehäuses 11 mit Schmiermittel versorgt. Die Schmiermittelversorgung 15 weist Schmiermittelführungen 15.1 auf, die zu den hydrodynamischen Gleitlagern 12.2 geleitet sind. Weiterhin sind Ableitungen 15.2 vorgesehen. Durch diese kann das Schmiermittel nach Durchströmen der hydrodynamischen Gleitlager 12.2 abgeleitet werden.

Im Anschluss an den Lagerabschnitt 12.1 besitzt die Welle 12 einen Dichtabschnitt 12.3. Mit diesem Dichtabschnitt 12.3 ist die Welle 12 gegenüber einer Durchführung des Lagergehäuses 11 abgedichtet.

Die Welle 12 trägt anschließend an den Dichtabschnitt 12.3 einen Motorrotor 12.4. Der Motorrotor 12.4 ist Teil eines Elektromotors und weist Permanentmagnete 12.5 auf, die mit der Welle 12 fest verbunden sind.

Auf der dem Dichtabschnitt 12.3 gegenüberliegenden Seite des Motorrotors 12.4 bildet die Welle 12 einen Übergangsabschnitt 12.6. Auf diesem Übergangsabschnitt 12.6 ist ein Verdichterrad 12.9 montiert. Zu diesem Zweck weist das Verdichterrad 12.9 eine Bohrung auf, mit der es auf die Welle 12 aufgeschoben ist. Das Verdichterrad 12.9 stützt sich gegen den Übergangsabschnitt 12.6 ab und wird mit einer Mutter 12.8 gesichert. Die Mutter 12.8 ist auf einen Endabschnitt 12.7 der Welle 12 aufgeschraubt.

Das Verdichterrad 12.9 besitzt ein Abschlusselement 36, an dem Verdichterschaufeln 12.10 einteilig angeformt sind. Das Verdichterrad 12.9 ist drehbar in einem Verdichtergehäuse 30 angeordnet. Das Verdichtergehäuse 30 besitzt eine Gaszuführung 31, die stromauf des Verdichterrads 12.9 angeordnet ist. In Strömungsrichtung nach dem Verdichterrad 12.9 ist ein Diffusorkanal 35 vorgesehen. Der Diffusorkanal 35 geht in einen spiralförmigen Verdichterkanal 32 über.

Wie Figur 1 zeigt, weist das Verdichtergehäuse 30 eine Anschlussseite 33 auf. Mit dieser Anschlussseite 33 ist das Verdichtergehäuse 30 an ein Motorgehäuse 20 angekoppelt. Dabei stützt sich das Verdichtergehäuse 30 mit seiner Anschlussseite 33 an einer Stützfläche 24 des Motorgehäuses 20 ab. Für eine abgedichtete Verbindung ist eine Dichtung 34 im Bereich der Anschlussseite 33 vorgesehen.

Das Motorgehäuse 20 besteht vorzugsweise aus einem nicht magnetisierbaren Material, beispielsweise aus Aluminium und besitzt eine Wandung 21, die in Form eines Bodens an der dem Lagergehäuse 11 zugewandten Seite angeordnet ist. Die Wandung 21 ist mit einer Durchführung 21.1 in Form einer Bohrung versehen. In diese Durchführung 21.1 ist ein Zentrierabschnitt 17 des Lagergehäuses 11 eingepasst. Auf diese Weise ist das Motorgehäuse 20 gegenüber dem Lagergehäuse 11 in radialer Richtung ausgerichtet. Vorteilhafterweise kann es weiterhin vorgesehen sein, dass die Durchführung 21.1 zusätzlich zu dem Zentrierabsatz 17 einen weiteren axialen Abschnitt aufweist. Dieser weitere axiale Abschnitt hat einen zu dem Zentrierabsatz 17 abweichenden Innendurchmesser und dient zur Aufnahme des Motorrotors 12.5.

Wie Figur 1 erkennen lässt, ist das Motorgehäuse 20 zwischen dem Lagergehäuse 11 und dem Verdichtergehäuse 30 angeordnet. Entsprechend besitzt das Lagergehäuse 11 eine Befestigungsfläche 16.1, die vorzugsweise an einem Flansch 16 ausgebildet sein kann. Das Motorgehäuse 20 liegt mit einer Stützfläche 26 an der Befestigungsfläche 16.1 an. Zur Abdichtung ist eine Dichtung 21.2 im Bereich zwischen der Stützfläche 26 und der Befestigungsfläche 16.1 vorgesehen.

Dadurch, dass das Motorgehäuse 20 zwischen dem Lagergehäuse 11 und dem Verdichtergehäuse 30 angeordnet ist, wird eine kompakte und einfach zu montierende Bauweise erreicht. Zur Fixierung der Baueinheiten aneinander können Befestigungselemente 50, beispielsweise Befestigungsschrauben vorgesehen sein. Mit den Befestigungselementen 50 können die drei Gehäuse gegeneinander verspannt werden.

Das Motorgehäuse 20 besitzt im Anschluss an die Wandung 21 eine umlaufende Seitenwand 22. Dabei steigt die Seitenwand 22 von der Wandung 21 auf. Im vorliegenden Ausführungsbeispiel schließt die Seitenwand 22 mittelbar über eine Verrundung 27.1 an die Wandung 21 an. Entsprechend bildet die Seitenwand 22 eine Innenwand 22.1. Diese geht über die Verrundung 27.1 in einen Bodenabschnitt 27.2 der Wandung 21 über.

Die Innenwand 22.1, die Verrundung 27.1 und der Bodenabschnitt 27.2 bilden eine gemeinsame Aufnahme. In dieser Aufnahme ist eine Vergussmasse 28 aufgenommen.

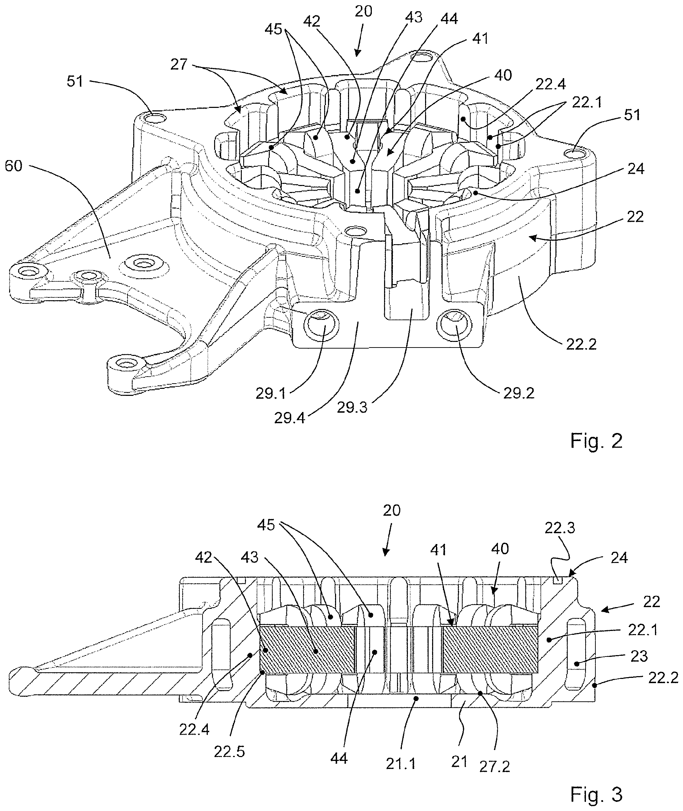

In den Figuren 2 und 3 ist die Gestaltung des Motorgehäuses 20 deutlicher erkennbar. Wie diese Darstellungen zeigen, ist die Innenwand 22.1 mit zueinander in Umfangsrichtung beabstandeten Stützabschnitten 22.4 versehen. Zwischen den Stützabschnitten 22.4 sind Aufnahmebereiche 27 gebildet. Diese Aufnahmebereiche 27 sind in Form von vertieften Mulden in die Innenwand 22.1 eingearbeitet.

In dem Motorgehäuse 20 kann ein Motorstator 40 untergebracht werden. Der Motorstator 40 besitzt einen Statorkern 41 aus ferromagnetischem Material. Insbesondere ist der Statorkern 41 aus mehreren Elektroblechen gebildet, die in Achsrichtung der Welle 12 aufeinander gestapelt sind. Beispielsweise kann der Statorkern 41 stanzpaketiert sein. Dabei werden einzelne Statorbleche aus einem Blechzuschnitt ausgestanzt und übereinandergestapelt. Die einzelnen Statorbleche können über Verprägungen zu einem einheitlichen Statorkern 41 miteinander verbunden sein.

Wie Figur 2 zeigt, weist der Statorkern 41 Zähne 43 auf. Diese Zähne 43 ragen radial nach innen. Die Zähne 43 sind an ihren radial außen liegenden Bereichen mit Verbindungsabschnitten 42 miteinander verbunden. Vorzugsweise sind die Verbindungsabschnitte 42 einteilig mit den Zähnen 43 verbunden. An ihren radial innenliegenden Enden weisen die Zähne 43 Polstücke 44 auf.

Der Statorkern 41 besitzt Spulen 45. Diese Spulen 45 werden von elektrisch leitenden Drähten gebildet, die um die Verbindungsabschnitte 42 herum gewickelt sind. Wie Figur 2 erkennen lässt, sind die Spulen 45 mit ihrem radial außen liegenden Bereich in den Aufnahmen 27 aufgenommen. Der radial innenliegende Bereich der Spulen 45 ist jeweils zwischen zwei benachbarten Zähnen 43 angeordnet.

Wie Figur 3 zeigt, kann der Statorkern 41 mit seinen Spulen 45 in das Motorgehäuse 20 eingelegt werden. Dabei stützt sich der Statorkern 41 mit seinen Verbindungsabschnitten 42 radial außen an den Stützabschnitten 22.4 des Motorgehäuses 20 ab. Mit den über den Umfang des Statorkerns 41 verteilt angeordneten Stützabschnitten 22.4 wird eine radiale Zentrierung des Statorkerns 41 erreicht. Idealerweise steht der Statorkern 41 in direktem Kontakt mit den Stützabschnitten 22.4, um eine gute Wärmeleitung der im Elektromotor erzeugten Verlustwärme in das Motorgehäuse 20 zu erreichen. Fertigungsbedingt kann jedoch auch hier ein geringes Spiel vorgesehen sein. Allerdings sollte dieses Spiel so toleriert sein, dass eine dadurch entstehende Desaxierung des Motorstators 40 zu dem Motorrotor 12.4 sich nicht negativ auf die Rotordynamik auswirkt.

Alternativ kann der Statorkern 41 in Verlängerung der nach innen gerichteten Zähne 43 radial nach außen gerichtete Zähne aufweisen, so dass der Statorkern 41 die Stützabschnitte 22.4 über die radial nach außen gerichteten Zähne kontaktiert.

Zusätzlich oder alternativ kann der Statorkern 41 in Achsenrichtung der Welle 12 an Widerlagern 22.5 des Motorgehäuses 20 abgestützt sein. Die Widerlager 22.5 können beispielsweise an die Stützabschnitte 22.4 im Winkel anschließen. Über die Widerlager 22.5 wird ein definierter Abstand des Motorstators 40 zu dem sich an das Motorgehäuse 20 anschließende Lagergehäuse 11 eingehalten. Vorzugsweise sollte dieser Abstand nicht kleiner als zwei Millimeter sein. Dieser Mindestabstand ist insbesondere dann erforderlich, wenn das Lagergehäuse 11 aus einem magnetisierbaren Material besteht.

Die radial innen liegenden Polstücke 44 liegen auf einem Innenkreis, wie die Figuren 2 und 3 zeigen. Dieser Innenkreis ist konzentrisch zu der Durchführung 21.1 in der Wandung 21 angeordnet.

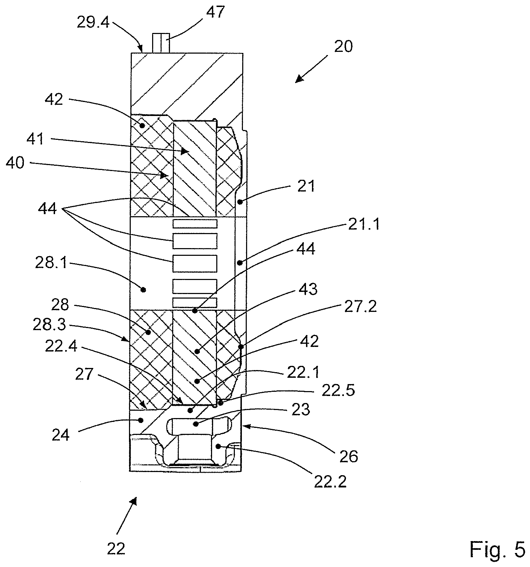

Der in das Motorgehäuse 20 eingelegte Statorkern 41 kann mit der Vergussmasse 28 umschlossen werden, wie dies die Figuren 1 und 5 zeigen. Der eingegossen Statorkern 41 wird dabei im Bereich der Spulen 45, der Zähne 43 und der Verbindungsabschnitte 42 von der Vergussmasse 28 umgeben. Lediglich die freien Enden der Zähne 43, welche die Polstücke 44 bilden und/oder die den Stützabschnitten 22.4 und/oder den Widerlagern 22.5 zugekehrten Bereiche werden nicht von der Vergussmasse 28 umschlossen. Denkbar ist es jedoch auch, dass zwischen den Stützabschnitten 22.4 und/oder den Widerlagern 22.5 Spaltbereiche gebildet werden, in denen auch Vergussmasse 28 angeordnet ist.

Die Figuren 1 und 5 zeigen weiter, dass die Polstücke 44 unter Einhaltung eines Spaltbereichs dem Motorrotor 12.4 gegenüberstehen. Koaxial zu dem von den Polstücken 44 eingeschlossenen Kreis bildet die Vergussmasse 28 einen Durchbruch 28.1. Vorzugsweise entspricht der Durchmesser dieses als Bohrung ausgebildeten Durchbruchs 28.1 dem Durchmesser des von den Polstücken 44 eingeschlossenen Kreises. Dann kann der Durchbruch 28.1 und die radial innen liegenden Enden der Polstücke 44 in einer Aufspannung bearbeitet werden. Beispielsweise können mit einem Bohrer der Durchbruch 28.1 und gleichzeitig die Polstücke 44 bearbeitet werden.

Figur 1 zeigt, dass die Vergussmasse 28 hinter dem Verdichterrad 12.9 eine Begrenzungsfläche 28.2 aufweist. Dabei ist die Begrenzungsfläche 28.2 unter Einhaltung eines Spalts beabstandet zu der Rückseite des Abschlusselements 36 des Verdichterrads 12.9 angeordnet. Die Vergussmasse 28 kann passgenau zur Erzeugung der Begrenzungsfläche bearbeitet und an die Kontur des Verdichterrads 12.9 angepasst werden. Die Begrenzungsfläche 28.2 kann, wie dies Figur 1 weiter zeigt, über einen Absatz in ein Luftführungselement 28.3 übergehen. Das Luftführungselement 28.3 erstreckt sich vorzugsweise in radialer Richtung.

Der Absatz zwischen der Begrenzungsfläche 28.2 und dem Luftführungselement 28.3 kann beispielsweise dergestalt sein, dass er den radial außen liegenden Bereich des Abschlusselements 36 übergreift. Hierdurch wird eine verbesserte Luftführung insbesondere dann erreicht, wenn das Luftführungselement 28.3 sich vorzugsweise absatzlos unmittelbar an die von den Verdichterschaufeln 12.10 gebildeten Luftführungsbereiche anschließt.

Das Luftführungselement 28.3 kann, wie dies im Ausführungsbeispiel nach Figur 1 gezeigt ist, eine Begrenzungsfläche für den Diffusorkanal 35 bilden. Entsprechend wird der Diffusorkanal 35 zwischen dem Luftführungselement 28.3 und einem Wandbereich des Verdichtergehäuses 30 gebildet.

Im Rahmen der Erfindung muss sich das Luftführungselement 28.3 nicht oder nicht vollständig radial erstrecken. Es kann auch eine beliebige andere Kontur aufweisen, um in optimaler Weise eine geeignete Luftführung zu bieten.

Die Figuren zeigen weiter, dass sich an den Diffusorkanal 35 der Verdichterkanal 32 in Form eines Spiralkanals anschließt. Das Luftführungselement 28.3 kann insbesondere bis in den Bereich des Verdichterkanals 32 geführt sein und/oder Teil von diesem sein. Allerdings ist es auch denkbar, dass das Luftführungselement 28.3 nur den Diffusorkanal 35 über dessen gesamte radiale Erstreckung oder nur über einen Teil seiner Radialerstreckung begrenzt.

Dadurch, dass das Luftführungselement 28.3 den Diffusorkanal 35 begrenzt, wird eine kompakte Bauweise des Turboverdichters in Achsenrichtung bewirkt. Insbesondere kann das Verdichterrad 12.9 dann nahe an der zugewandten Lagerstelle 14 angeordnet werden. Dies reduziert die Lagerbelastung und erhöht die Laufruhe des Turboverdichters 10.

In weiterer vorteilhafter Ausgestaltung kann die dem Verdichtergehäuse 30 zugewandte Seite der Vergussmasse 28 so bearbeitet sein, dass sie einen Absatz 28.4 bildet. Dieser Absatz 28.4 greift in eine Ausnehmung des Verdichtergehäuses 30 ein, um dieses exakt radial gegen über dem Motorgehäuse 20 auszurichten.

Figur 1 zeigt weiter, dass die Vergussmasse 28 im Bereich der Wandung 21 und koaxial zu der Durchführung 21.1 mit einer Freimachung 28.5 versehen sein kann.

Damit wird erreicht, dass die Vergussmasse 28 die Positionierung des Zentrierabsatzes 17 nicht behindert.

Die Spulen 45 können über Strom-Versorgungsleitungen 46 an eine Spannungsversorgung angeschlossen sein. Die Strom-Versorgungsleitungen 46 sind vorzugsweise in die Vergussmasse 28 eingebettet. Wie Figur 1 zeigt, kann zu diesem Zweck beispielsweise zwischen dem Statorkern 41 und dem Verdichterrad 12.9 in dem Motorgehäuse 20 ein Raumbereich vorgesehen sein, in dem die Strom-Versorgungsleitungen 46 verlegt sind und der mit der Vergussmasse 28 ausgegossen ist. Auf diese Weise sind die Strom-Versorgungsleitungen 46 vor Korrosion und mechanischen Beanspruchungen geschützt untergebracht.

Figur 2 zeigt, dass das Motorgehäuse 20 seitlich eine Öffnung 29.3 aufweist, die Zugang zu dem Bereich schafft, in dem der Motorstator 40 im Motorgehäuse 20 aufgenommen ist. Diese Öffnung 29.3 dient dazu, die Strom-Versorgungsleitungen 46 seitlich aus dem von dem Motorgehäuse 20 gebildeten Raumbereich herauszuführen. Entsprechend können die Strom-Versorgungsleitungen 46 zu einer Anschlussseite 29.4 des Motorgehäuses 20 geführt werden. Vorzugsweise ist der die Öffnung 29.3 bildende Kanalbereich von der Vergussmasse 28 ausgefüllt. In Figur 1 ist angedeutet, dass im Bereich der Anschlussseite 29.4 ein Stromanschluss 47, beispielsweise ein Steckerelement angeordnet sein kann. Über diesen Stromanschluss 47 können die Spulen 45 an eine Spannungsversorgung einfach angekoppelt werden. Der Stromanschluss kann in die Vergussmasse 28 eingegossen sein.

Die Zeichnungen zeigen weiter, dass das Motorgehäuse 20 einen Kühlabschnitt 22.2 aufweist. Dieser Kühlabschnitt 22.2 umgibt den Motorstator 12.4 radial außen. In den Kühlabschnitt 22.2 ist ein Kühlmittelkanal 23 eingearbeitet. Dieser Kühlmittelkanal 23 umläuft den Motorstator 12.4 über zumindest 180°, vorzugsweise über zumindest 270° seines Umfangs. Die Enden des Kühlmittelkanals 23 münden in einem Kühlmittelauslass 29.1 und in einem Kühlmitteleinlass 29.2. Der Kühlmittelauslass 29.1 und der Kühlmitteleinlass 29.2 können so hergerichtet sein, dass darin Anschlussstutzen positioniert sind, über die ein Schlauch oder dergleichen Kühlmittelleitung angeschlossen werden kann. Wie Figur 2 zeigt, sind der Kühlmittelauslass 29.1 und der Kühlmitteleinlass 29.2 nebeneinander auf der gleichen Seite des Motorgehäuses 20 ausgebildet. Auf diese Weise entsteht im Motorgehäuse 20 ein Kühlmantel, der das Motorgehäuse 20 nahezu komplett in Umfangsrichtung des Motorgehäuses 20 umströmen kann.

Idealerweise werden die Stromversorgungsleitungen 46 zwischen dem Kühlmittelauslass 29.1 und dem Kühlmitteleinlass 29.2 durch die Öffnung 29.3 hindurch geführt, sodass es keine Kollision zwischen der Verkabelung und der Kühlmittelführung gibt.

Weiter idealerweise ist das Motorgehäuse aus einem thermisch gut leitenden Material, beispielsweise Aluminium hergestellt. Denkbar ist auch die Verwendung eines geeigneten Kunststoffes. Das Material sollte wegen der kompakten Bauweise des Motorgehäuses 20 nicht magnetisierbar sein, um die Funktionalität des Elektromotors nicht zu beeinträchtigen.

Wenn das Motorgehäuse 20 als Gussteil hergestellt wird, so wird zur Herstellung des Kühlmittelkanals 23 ein verlorener Kern eingesetzt. Für dessen Herstellung werden ein oder werden mehrere radiale Zugänge zum Kühlmittelkanal 23 geschaffen. Über diese radialen Zugänge kann der verlorene Kern nach Fertigung des Motorgehäuses 20 entnommen werden. Die Radialzugänge lassen sich dann beispielsweise mit einem Stopfen 25 fluiddicht verschließen.

Die Montage des Turboverdichters 10 ist wie folgt. Zunächst wird das Lagergehäuse 11 mit der darin gelagerten Welle 12 hergerichtet. Anschließend wird das Motorgehäuse 20 über die Welle 12 geschoben, bis der Motorrotor 12.4 dem Motorstator 40 unter Bildung eines Spaltbereichs gegenübersteht. Diese Fügebewegung wird mittels der Befestigungsfläche 16.1, an der das Motorgehäuse 20 anschlägt, begrenzt. Anschließend kann das Verdichterrad 12.9 auf der Welle 12 montiert und die Mutter 12.8 angezogen werden.

Abschließend wird das Verdichtergehäuse 30 an der dem Lagergehäuse 11 gegenüberliegenden Seite an das Motorgehäuse 20 angefügt. Das Verdichtergehäuse 30, das Motorgehäuse 20 und das Lagergehäuse 11 weisen zueinander fluchtende Bohrungen auf. Durch diese können Befestigungsschrauben 50 hindurchgesteckt und verschraubt werden. Alternativ kann das Motorgehäuse 20 auch am Lagergehäuse 11 angeschraubt sein. Das Verdichtergehäuse 30 kann auch nur mit dem Motorgehäuse 20, beispielsweise über eine getrennte Verschraubung oder über ein Spannband verbunden werden.

Zur Fertigung des Motorgehäuses 20 wird zunächst die in den Figuren 2 und 3 gezeigte Baueinheit gebildet. Dabei ist die Wandung 21 so gestaltet, dass sie noch nicht mit der Durchführung 21.1 versehen ist. Anschließend kann die in den Figuren 2 und 3 gebildete Baueinheit mit der Vergussmasse 28 befüllt werden. Dann wird in einem Arbeitsschritt der Durchbruch 28.1 in der Vergussmasse 28 und gleichzeitig die Durchführung 21.1 gebohrt. Weiterhin lassen sich an der ausgehärteten Vergussmasse 28 das Luftführungselement 28.3 und/oder die Begrenzungsfläche 28.2 und/oder der Absatz 28.4 und/oder die Freimachung 28.5 mittels spanender Bearbeitung nacharbeiten.

Im Rahmen der Erfindung kann die Vergussmasse 28 von einem thermisch beständigen Material, vorzugsweise einem Harzmaterial, beispielsweise von einem mit Aluminiumoxid gefüllten Hochtemperaturharz gebildet sein.

Bevorzugt ist die Vergussmasse von einem wärmeleitenden Material gebildet und weist vorzugsweise eine Wärmeleitfähigkeit im Bereich zwischen 0,5 W/ (m K) und 5 W / (m K) auf. Auf diese Weise kann die Verlustwärme des Elektromotors zuverlässig über die Kontaktbereiche zwischen der Vergussmasse 28 und dem Motorgehäuse 20 in das Kühlmedium im Kühlmittelkanal 23 abgeleitet werden. Auch wird auf diese Weise eine Wärmeableitung über das Luftführungselement 28.3 in die Verdichterluft, welche im Verdichtergehäuse 30 geführt wird, erreicht.

Um einen Kurzschluss zu verhindern, besteht die Vergussmasse 28 vorzugsweise aus einem elektrisch nicht leitenden Material. Dann kann auf zusätzliche Isolationsmaßnahmen verzichtet werden.

Wie Figur 2 zeigt, kann an das Motorgehäuse 20 ein Halter 60, zur Befestigung eines Aktuators des elektrisch unterstützten Turboverdichters, angegossen sein.

In dem in den Figuren 1 bis 5 dargestellten Ausführungsbeispiel wird der Statorkern 41 an den axial nach innen vorspringenden Stützabschnitten 22.4 gegenüber der Innenwand 22.1 abgestützt. Alternativ ist es jedoch auch denkbar, dass radial nach außen vorspringende Stützabschnitte am Statorkern 41 vorhanden sind, die dann im Kontakt zu dem Motorgehäuse 20 stehen.

Eine Verdrehung des Statorkerns 41 gegenüber dem Motorgehäuse 20 zu verhindern, empfiehlt es sich in diesem Fall, eine in Umfangsrichtung formschlüssige Verbindung zwischen dem Motorgehäuse 20 und dem Statorkern 41 vorzusehen. In dem in den Figuren 1 bis 4 dargestellten Ausführungsbeispiel wird der Statorkern 41 kann bei beiden Ausführungsformen mittels der Vergussmasse 28 verhindert werden. Hierdurch kann beispielsweise auch eine formschlüssige Verbindung zwischen dem Statorkern 41 und dem Motorgehäuse 20 hergestellt werden.

Eine weitere alternative Ausgestaltungsvariante der Erfindung sieht vor, dass die Motoreinheit ein ringförmiges Motorgehäuse 20 aufweist, das sowohl auf der Verdichterseite als auch auf der Lagergehäuseseite von der elektrisch isolierenden Vergussmasse 28 abgeschlossen ist. Das Motorgehäuse 20 ist somit bodenlos und nicht topfförmig ausgestaltet.

Eine weitere alternative Ausgestaltungsvariante kann so sein, dass das Motorgehäuse 20 und das Lagergehäuse 11 gemeinsam einteilig, zum Beispiel aus Aluminium oder Kunststoff gefertigt sind.

Während des Betriebs des Turboverdichters 10 kann der Antrieb des Verdichterrads 12.9 durch den Elektromotor unterstützt werden. Dabei entsteht in den Spulen 45 des Motorstators 40 Verlustwärme. Diese Verlustwärme überträgt sich auf den Statorkern 41. Da nun der Statorkern über die Stützabschnitte 22.4 mit dem Motorgehäuse 20 in Verbindung steht, wird diese Wärme in das Motorgehäuse 20 zumindest teilweise eingetragen. Das Motorgehäuse 20 besteht aus einem gut wärmeleitfähigen Material, beispielsweise Aluminium, wie dies oben erwähnt wurde. Dementsprechend wird die Wärme in den Kühlmittelkanal und das dort strömende Fluid geleitet. Wenn, wie bei dem vorliegenden Ausführungsbeispiel auch vorgesehen ist, dass der Statorkern 41 an den Widerlagern 22.5 abgestützt ist, so erfolgt auch über die Widerlager 22.5 ein Wärmeeintrag in das Motorgehäuse 20.

Im Rahmen der Erfindung kann es zum Zwecke einer besonders effektiven Wärmeabfuhr vorgesehen sein, dass jedem Verbindungsabschnitt 42 des Statorkerns 41 ein Stützabschnitts 22.4 und/oder ein Widerlager 22.5 zugeordnet ist. Hierdurch kann die thermisch wirksame Kontaktfläche zwischen dem Statorkern 51 und dem gekühlten Gehäuse 20 maximiert werden. Im vorliegenden Ausführungsbeispiel sind sechs Polpaare des Elektromotors vorgesehen. Dementsprechend sind zwölf Stützabschnitte 22.4 und/oder zwölf Widerlager 22.5 vorgesehen. Dies ist jedoch nicht zwingend. Insbesondere kann auch nur einem Teil der Stützabschnitte 22.4 und/oder ein Teil der Widerlager 22.5 an dem Statorkern 41 anliegen.

Die Zeichnungen zeigen auch, dass die Stützabschnitte 22.4 in radialer Verlängerung zu den Zähnen 43 des Statorkerns stehen. Besonders vorteilhaft ist es, wenn die miteinander in Verbindung stehenden Kühlabschnitte des Motorgehäuses 20 und der Verbindungsabschnitte 42 des Statorkerns 41 zentrisch oder annähernd zentrisch zwischen den benachbarten Spulen 45 angeordnet sind, um eine gleichmäßige Wärmeabfuhr zu erreichen.

Wie insbesondere Figur 2 zeigt, erstreckt sich der Kühlmittelkanal 23 von dem Kühlmitteleinlass 29.2 zu dem Kühlmittelauslass 29.1. Die Zeichnung gibt zu erkennen, dass sich dabei der Kühlmittelkanal 23 um über 270° des Umfangs des Motorstators 40 erstreckt, so das eine besonders effektive Kühlung möglich wird.

In Figur 4 ist eine Motoreinheit gezeigt, die im Wesentlichen der Motoreinheit gemäß den Figuren 1 bis 3 und 5 entspricht. Insofern wird auf die vorstehenden Ausführungen zu diesen Figuren Bezug genommen. Zur Vermeidung von Wiederholungen wird lediglich auf die Unterschiede eingegangen. Wie Figur 4 zeigt, ist das Motorgehäuse 20 hinsichtlich der Gestaltung des Kühlmittelkanals 23 abgeändert. Dementsprechend weist der Kühlmittelkanal 23 einen ersten Bereich auf, der sich in Achsrichtung der Welle erstreckt. Anschließend an diesen 1. Bereich besitzt der Kühlmittelkanal 23 einen Radialbereich, der sich zumindest bereichsweise in radialer Richtung erstreckt. Die Projektionen des Motorstators 40 und des Radialbereichs in Richtung der der Achse der Welle 12 in eine Ebene überdecken sich zumindest bereichsweise. Bei dieser Ausgestaltung eines Turboverdichters 10 wird nicht nur eine Wärmeabfuhr von den Spulen 45 in den Kühlmittelkanal 23 in radialer Richtung, sondern auch in Achsenrichtung der Welle 12 erreicht.

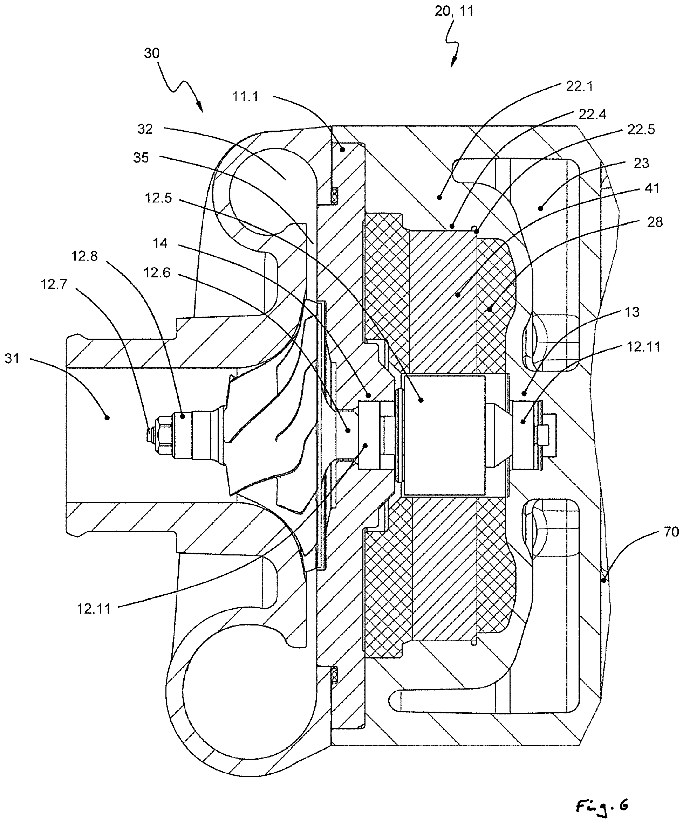

Grundsätzlich ist es denkbar, dass das Motorgehäuse 20 zusätzlich zumindest teilweise die Funktion eines Lagergehäuses 11 übernimmt. In einer solchen Ausführungsform, wie sie in Figur 6 dargestellt ist, kann eine der Lagerstellen 13, 14 zur Aufnahme eines Lagers, insbesondere eines Wälzlagers 12.11 am bzw. innerhalb des Motorgehäuses 20 angeordnet sein. Vorzugsweise kann die andere der beiden Lagerstellen 13, 14 zur Aufnahme eines Lagers, insbesondere Wälzlagers 12.11 an einem weiteren am Motorgehäuse 20 festgelegten Teil, z.B. einer Deckscheibe 11.1, angeordnet ist. In anderen Worten sind Motorgehäuse 20 und Lagergehäuse 11 zumindest teilweise integral miteinander ausgebildet.

Aufgrund der oben beschriebenen besonders kompakten Bauweise des Motorstators 40 weist der Motorstator 40 eine maximale Längserstreckung L in Achsrichtung der Welle 12 und einen maximalen Außendurchmesser D auf, deren Verhältnis L/D der maximalen Längserstreckung L zu dem maximalen Außendurchmesser D vorzugsweise ≤0,3 ist. Eine besonders vorteilhaft Ausführungsform sieht dabei vor, dass das/die die Welle 12 drehbar lagernden Lager, vorzugsweise Wälzlager 12.11, so in dem Motorgehäuse 20 angeordnet ist/sind, dass diese in Achsrichtung der Welle 12 zumindest teilweise von der Vergussmasse 28 axial überdeckt sind. In anderen Worten ragen die Lager 12.11 in Achsrichtung der Welle 12 gesehen nur teilweise über die axial begrenzenden Flächen der Vergussmasse 28 hinaus.

Gemäß einer weiteren bevorzugten Ausführungsform kann es vorgesehen sein, dass sich auf der dem Verdichtergehäuse 30 gegenüberliegenden Seite des Motorgehäuses 20 ein Aufnahmeraum 70 zur Aufnahme der Leistungselektronik zum Betreiben des im Motorgehäuse 20 aufgenommenen Elektromotors befindet. Der Aufnahmeraum 70 kann dabei integral mit dem Motorgehäuse 20 ausgebildet sein oder eine separate Baueinheit bilden, wobei in einer besonders bevorzugten Ausführungsform der Kühlmittelkanal 23 so zwischen Motorstator 40 und Aufnahmeraum 70 angeordnet sein kann, dass sowohl der Motorstator 40 als auch die in dem Aufnahmeraum 70 aufgenommene Leistungselektronik Wärme in axialer und/oder radialer Richtung an den Kühlmittelkanal 23 abgeben können.

## Patentansprüche

1. Turboverdichter, insbesondere Abgasturbolader oder elektrisch angetriebener Turboverdichter (10), mit einem Lagergehäuse (11), in dem eine Welle (12) drehbar gelagert ist, wobei die Welle (12) ein Verdichterrad (12.9) trägt, wobei ein Elektromotor zum Antrieb der Welle (12) vorgesehen ist, der einen Motorstator (40) und einen mit der Welle (12) gekoppelten Motorrotor (12.4) aufweist, wobei der Motorstator (40) zumindest bereichsweise in einem Motorgehäuse (20) aufgenommen ist und einen ferromagnetischen Statorkern (41) mit elektrischen Spulen (45) aufweist, wobei das Motorgehäuse (20) und/oder das Lagergehäuse (11) zumindest einen Kühlmittelkanal (23) aufweisen der den Motorstator (40) zumindest bereichsweise umgibt,
**dadurch gekennzeichnet,**
**dass** der Statorkern (41) einen einteiligen oder mehrteiligen Ringabschnitt aufweist, an den sich radial nach innen erstreckende Zähne (43) angekoppelt sind, dass der Ringabschnitt zwischen benachbarten Zähnen (43) Verbindungsabschnitte (42) als Joche ausbildet, dass zumindest auf einen Teil der Verbindungsabschnitte (42) die Spulen (45) zumindest bereichsweise aufgewickelt sind, und dass der Statorkern (41) im Bereich der Verbindungsabschnitte (42) Kühlabschnitte bildet, die Kühlabschnitten des Motorgehäuses (20) und/oder dem Lagergehäuses (11) gegenüberstehen, insbesondere an diesen anliegen.

2. Turboverdichter (10) nach Anspruch 1, **dadurch gekennzeichnet, dass** die Kühlabschnitte des Statorkerns (41) vorstehende, insbesondere in Radialrichtung nach außen vorstehende Stützabschnitte aufweisen und/oder dass die Kühlabschnitte des Lagergehäuses (11) und/oder des Motorgehäuses (20) vorstehende, insbesondere in Radialrichtung nach innen vorstehende Stützabschnitte (22.4) aufweisen.

3. Turboverdichter (10) nach Anspruch 1 oder 2, **dadurch gekennzeichnet, dass** zumindest ein Teil der Kühlabschnitte des Statorkerns (41) und/oder des Lagergehäuses (11) und/oder des Motorgehäuses (20) Widerlager (22.5) aufweisen, an denen der Statorkern (41) anliegt und an denen er in Achsrichtung der Welle (12) formschlüssig blockiert ist.

4. Turboverdichter (10) nach einem der Ansprüche 1 bis 3, **dadurch gekennzeichnet, dass** wenigstens ein Teil der Kühlabschnitte zumindest bereichsweise in radialer Verlängerung zu den Zähnen (43) des Statorkerns (41) angeordnet ist.

5. Turboverdichter (10) nach einem der Ansprüche 1 bis 4, **dadurch gekennzeichnet, dass** die Zähne (43) in Polstücken (44) enden, die unter Bildung eines Spaltbereichs dem Motorrotor (12.4) gegenüberstehen.

6. Turboverdichter (10) nach einem der Ansprüche 1 bis 5, **dadurch gekennzeichnet, dass** der Motorstator (40) eine maximale Längserstreckung (L) in Achsrichtung der Welle (12) und einen maximalen Außendurchmesser (D) aufweist, und dass das Verhältnis (L/D) der maximale Längserstreckung (L) zu dem maximalen Außendurchmesser (D) vorzugsweise ≤0,3 ist.

7. Turboverdichter (10) nach einem der Ansprüche 1 bis 6, **dadurch gekennzeichnet, dass** der Kühlmittelkanal (23) den Motorstator (41) über zumindest 270° seines Umfangs umgibt, dass der Kühlmittelkanal (23) einen Kühlmitteleinlass (29.2) und einen Kühlmittelauslass (29.1) aufweist, die im Bereich des Endes des Kühlmittelkanals (23) zu einer Anschlussseite (29.4) des Motorgehäuses (30) oder des Lagergehäuses (11) geführt sind.

8. Turboverdichter (10) nach Anspruch 7, **dadurch gekennzeichnet, dass** im Bereich zwischen dem Kühlmitteleinlass (29.2) und dem Kühlmittelauslass (29.1) eine Öffnung (29.3) des Motorgehäuses (20) vorgesehen ist, die radialen Zugang zu dem den Motorstator (40) aufnehmenden Bereich des Motorgehäuses (20) schafft und durch die hindurch die Spulen (45) elektrifiziert sind, insbesondere Strom-Versorgungsleitungen (46) geführt sind.

9. Turboverdichter (10) nach einem der Ansprüche 1 bis 8, **dadurch gekennzeichnet, dass** das Motorgehäuse (20) aus einem nicht magnetisierbaren Material, insbesondere aus Aluminium besteht.

10. Turboverdichter (10) nach einem der Ansprüche 1 bis 9, **dadurch gekennzeichnet, dass** sich der Kühlmittelkanal (23) in Achsrichtung der Welle (12) zumindest über die sich in diese Richtung erstreckende Länge der Spulen (45) erstreckt.

11. Turboverdichter nach einem der Ansprüche 1 bis 10, **dadurch gekennzeichnet, dass** der Kühlmittelkanal (23) einen Bereich aufweist, der sich in Achsrichtung der Welle (23) erstreckt, dass der Kühlmittelkanal (23) weiterhin einen Radialbereich aufweist, der sich zumindest bereichsweise in radialer Richtung erstreckt, wobei sich die Projektionen des Motorstators und des Radialbereichs in Richtung der der Achse der Welle (12) in eine Ebene zumindest bereichsweise überdecken.

12. Turboverdichter nach einem der Ansprüche 1 bis 11, **dadurch gekennzeichnet, dass** der Kühlmittelkanal (23) zumindest bereichsweise im Anschlußbereich zwischen dem Motorgehäuse (20) und dem Lagergehäuse (11) verläuft.

13. Turboverdichter (10) nach einem der Ansprüche 1 bis 12, **dadurch gekennzeichnet, dass** im oder am Motorgehäuse (20) eine Vergussmasse (28) vorgesehen ist, wobei der Statorkern (41) und/oder die Spulen (45) zumindest bereichsweise in der Vergussmasse (28) eingebettet ist/sind.

14. Turboverdichter (10) nach Anspruch 13, **dadurch gekennzeichnet, dass** eine Gaszuführung (31) vorgesehen ist, die in Strömungsrichtung vor dem Verdichterrad (12.9) angeordnet ist und in Strömungsrichtung nach dem Verdichterrad (12.9) in einen Diffusorkanal (35) übergeleitet ist, dass der Diffusorkanal (35) mittelbar oder unmittelbar in einen spiralförmigen Verdichterkanal (32) übergeleitet ist, und dass die Vergussmasse (28) einen Wandabschnitt bildet, der als Luftführungselement (28.3) den Diffusorkanal (35) und/oder den Verdichterkanal (32) begrenzt.

15. Turboverdichter nach Anspruch 13 oder 14, **dadurch gekennzeichnet, dass** die Zähne (43) von der Vergussmasse (28) zumindest teilweise umgeben sind, wobei vorgesehen ist, dass zumindest ein Teil der Polstücke (44) an ihren an den Spaltbereich angrenzenden Enden nicht mit Vergussmasse (28) bedeckt ist.

16. Turboverdichter nach Anspruch 14 oder 15 Turboverdichter nach Anspruch 9, **dadurch gekennzeichnet, dass** die Zähne (43) des Statorkerns (41) von der Vergussmasse (28) zumindest teilweise umgeben sind, wobei vorgesehen ist, dass zumindest ein Teil der Polstücke (44) an ihren an den Spaltbereich angrenzenden Enden nicht mit Vergussmasse (28) bedeckt ist.

17. Turboverdichter nach einem der Ansprüche 1 bis 16, **dadurch gekennzeichnet, dass** die Innenwand (22.1) des Motorgehäuses (20) Aufnahmebereiche (27) aufweist, die in Form von radial nach außen in die Innenwand eingetieften Aufnahmen ausgebildet sind, und dass in den Aufnahmebereichen (27) jeweils zumindest eine Spule (45) mit ihrem radial außenliegenden Spulenbereich zumindest teilweise aufgenommen ist.

18. Turboverdichter nach einem der Ansprüche 1 bis 17, **dadurch gekennzeichnet, dass** das Motorgehäuse (20) und das Lagergehäuse (11) zumindest teilweise integral miteinander ausgebildet sind, sodass das Motorgehäuse (20) zumindest eine Lagerstelle aufweist.
